# FASCICULE DE BREVET EUROPEEN

(11) **EP 2 864 167 B1**
(45) Date de publication et mention de la délivrance du brevet: **18.05.2016**
(21) Numéro de dépôt: 13730870.6
(22) Date de dépôt: 19.06.2013
(51) Int. Cl.: B60T 13/74, F16D 65/18

(54) **SERVOFREIN ELECTRIQUE A COMPENSATION DE JEU DE TRANSMISSION**
ELEKTROMECHANISCHE BREMSE MIT GETRIEBESPIELKOMPENSATION
ELECTROMECHANICAL BRAKE CALIPER WITH TRANSMISSION PLAY COMPENSATION

(30) Priorité: 25.06.2012 FR 1256008
(43) Date de publication de la demande: 29.04.2015
(73) Titulaire: Robert Bosch GmbH, 70442 Stuttgart (DE)
(72) Inventeur: WINKLER, Roman, F-92600 Asnieres sur Seine (FR); RICHARD, Philippe, F-77500 Chelles (FR); CAGNAC, Bastien, F-60660 Cramoisy (FR); GAFFE, Francois, F-44420 La Turballe (FR); RITT, Jean-Marc, F-67000 Strasbourg (FR)
(86) Numéro de dépôt international: PCT/EP2013/062687
(87) Numéro de publication internationale: WO 2014/001162

(56) Documents cités:
- EP-A1- 2 465 741
- DE-A1- 19 823 568
- DE-A1-102006 010 483
- DE-A1-102009 027 468

## Description

### Domaine de l'invention

La présente invention se rapporte à un servofrein électrique comportant un moteur électrique actionnant un piston d'assistance agissant sur le maître-cylindre sur commande de la pédale de frein, le piston d'assistance étant entraîné dans le sens de son action sur le maître-cylindre par un moteur électrique relié à une transmission mécanique comprenant une vis portée par l'axe du moteur et engrenant avec deux roues à vis, symétriques, solidaires chacune d'un axe de transmission portant un pignon droit engrenant avec une crémaillère du piston d'assistance, chaque axe étant logé dans un palier du corps du servofrein.

### Etat de la technique

On connaît des servofreins électriques du type défini ci-dessus. Dans ces servofreins, comme l'entraînement du piston d'assistance se fait de manière symétrique équilibré par deux transmissions symétriques par rapport au plan passant par l'axe du piston d'assistance et la vis d'entraînement, mais comme mécaniquement, il est impossible d'avoir une symétrie parfaite, pour équilibrer l'entraînement par les deux transmissions symétriques, on laisse du jeu au piston d'assistance, c'est-à-dire aux crémaillères, de façon que le piston d'assistance puisse se positionner avec ses crémaillères pour que les pignons droits engrenant avec celles-ci attaquent de manière équilibrée les deux crémaillères. Mais le jeu qu'il faut laisser au piston d'assistance n'est pas adapté à la précision souhaitable du fonctionnement du servofrein et à sa fiabilité.

Le document DE 10 2009 0274 68 A1 décrit un servofrein électromechanique conventionnel, sans liberté en tranlation axiale.

### But de l'invention

La présente invention a pour but de perfectionner le guidage et l'entraînement du piston d'assistance par la transmission reliant le moteur électrique d'entraînement au piston d'assistance et notamment de permettre de réduire le jeu du piston d'assistance dans son logement de guidage dans le servofrein.

### Exposé et avantages de l'invention

A cet effet, l'invention a pour objet un servofrein électrique du type défini ci-dessus caractérisé en ce que les axes sont libres en translation par rapport à la vis et au corps du servofrein électrique mais solidaires entre eux dans leur mouvement de translation.

La liberté laissée aux deux axes portant les roues à vis engrenant avec la vis portée par l'axe de sortie du moteur d'entraînement permet d'équilibrer naturellement le jeu d'attaque des crémaillères, les pignons droits engrenant avec les crémaillères pouvant se déplacer en translation suivant leur axe géométrique par rapport aux crémaillères. Comme l'angle des dents des deux roues à vis dans les positions symétriques, dans la région de leur contact avec la vis ont des pentes inclinées en sens opposé par rapport au plan de symétrie passant par l'axe de la vis et l'axe du piston d'assistance, on arrive nécessairement dans une position d'équilibre permettant d'attaquer les deux crémaillères avec le même effort ou le même couple.

Ce mouvement d'équilibrage correspond à une translation des deux axes avec les roues à vis pour remonter ou descendre légèrement par rapport au plan médian passant par l'axe géométrique de la vis.

En conséquence, cet équilibrage naturel des deux transmissions symétriques ne nécessite aucun jeu particulier du piston d'assistance ou des crémaillères, ce qui permet de réaliser l'usinage avec une bonne précision gage de bon fonctionnement, de silence de fonctionnement et de fiabilité. L'usinage se fait de préférence suivant un ajustement glissant.

Suivant une autre caractéristique avantageuse, les axes sont reliés solidairement en translation par un organe de couplage constitué par une traverse portant deux paliers de rotation bloqués chacun sur un axe et coopérant avec un guidage axial parallèlement à l'axe géométrique des deux axes de transmission. Ce mode de réalisation de l'organe de couplage solidarisant les deux axes en translation a l'avantage de participer en même temps au guidage des deux axes.

Suivant une caractéristique avantageuse, l'organe de couplage se compose d'une traverse terminée par deux boucles recevant chacune la bague extérieure d'un des paliers de rotation. Ce mode de réalisation est particulièrement simple et facilite le montage de l'équipage mobile puisqu'il suffit d'encliper les paliers de rotation dans les boucles, en particulier si les boucles sont des boucles ouvertes. Ces boucles assurent en même temps le glissement de cette partie de l'équipage mobile dans le logement de guidage du corps du servofrein.

Cet organe de couplage est de préférence réalisé en une matière plastique.

Suivant une autre caractéristique avantageuse, chaque axe de transmission est muni d'un palier de rotation de part et d'autre du pignon droit engrenant avec sa crémaillère.

Suivant une autre caractéristique avantageuse, le palier bas à l'extrémité de l'axe de transmission du côté opposé à celle portant la roue à vis est un palier à roulement à aiguilles et le palier haut entre le pignon droit et la roue à vis est un palier à roulement à billes.

Comme déjà évoqué ci-dessus, le coulissement axial de l'organe de couplage est réalisé par un logement axial recevant d'une part chaque palier de rotation de chaque axe directement associé à l'organe de couplage et aussi un logement axial recevant l'autre palier de rotation de chaque axe.

De façon avantageuse, les paliers de rotation associés à l'organe de couplage sont des paliers à roulements à billes.

Suivant une autre caractéristique avantageuse, les deux axes sont solidarisés en translation selon leur axe par un organe de couplage constitué par un premier disque solidaire d'un axe et d'un double disque solidaire de l'autre axe et chevauchant le bord du disque, le guidage en translation des axes étant réalisé par des logements cylindriques recevant les paliers de rotation portés par chaque axe.

### Dessins

La présente invention sera décrite ci-après de manière plus détaillée à l'aide d'exemples de réalisation d'un servofrein électrique représentés schématiquement dans les dessins annexés pour les parties limitées à celles concernées par l'objet de l'invention.

Ainsi :
- la figure 1 est une vue en coupe schématique perpendiculaire à l'axe de la vis de la transmission du servofrein électrique entre la roue à vis du moteur électrique et les crémaillères du piston d'assistance,
- la figure 2A montre en vue en coupe l'organe de liaison en translation des deux axes,
- la figure 2B est une vue en plan de la figure 2A,
- la figure 3A montre un mode de réalisation de l'organe de couplage avec les deux paliers de rotation en forme de paliers à roulement en position d'engagement dans l'organe de couplage,
- la figure 3B montre l'organe de couplage assemblé aux deux paliers de rotation,
- la figure 4 montre schématiquement une première position d'équilibre des deux transmissions symétriques descendues, par rapport au plan médian nominal,
- la figure 5 montre la position d'équilibre inverse par remontée des deux transmissions symétriques, par rapport au plan médian,
- la figure 6 est une vue en coupe analogue à celle de la figure 1, montrant un autre organe de couplage en translation des deux axes symétriques.

### Description de modes de réalisation de l'invention

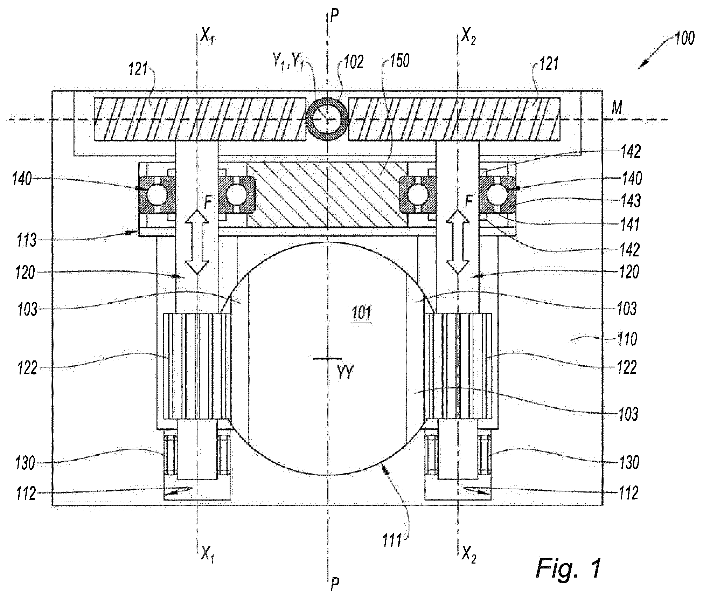

Selon la figure 1, l'invention se rapporte à un servofrein électrique 100 agissant par l'intermédiaire d'un piston d'assistance 101 sur le maître-cylindre du système de frein. Ni le maître-cylindre ni le système de frein en aval du maître-cylindre avec les freins de roue ne sont représentés. La figure se limite à une vue en coupe très schématique du servofrein électrique 100 perpendiculaire à l'axe du piston d'assistance 101 au niveau de la transmission d'entraînement du piston d'assistance à partir de l'axe de sortie 102 du moteur électrique, lui-même non représenté.

Le servofrein électrique 100 se compose d'un corps 110 logeant le piston d'assistance 101 guidé dans un cylindre 111 suivant un axe de translation yy perpendiculaire au plan de la figure 1.

Le moteur électrique a un axe de sortie portant la vis 102 d'axe géométrique perpendiculaire au plan de la figure 1. Cette vis 102 entraîne deux axes de transmission 120 symétriques par rapport au plan médian PP passant par l'axe géométrique de la vis 102 et celui du piston d'assistance 101. Le plan médian MM perpendiculaire au plan de la figure 1 et passant par l'axe géométrique y1y1 de la vis 102 constitue un plan de référence utilisé dans la description ultérieure.

Le piston d'assistance 101 comporte deux crémaillères 103 en position symétrique par rapport au plan PP pour l'entraînement du piston 101 à partir de la vis 102 par l'intermédiaire de deux transmissions symétriques constituées chacune par une roue à vis 121 engrenant avec la vis 102 et solidaires de l'axe de transmission 120 portant un pignon droit 122 engrenant chacun avec une crémaillère 103. La denture des deux roues 121 à vis est identique. Du fait de la position symétrique des deux transmissions par rapport au plan PP et à la vis 102, la rotation de la vis engrenant avec les roues à vis 121 se traduit par des mouvements de rotation opposés des deux pignons droits 122, qui entraînent ainsi le piston d'assistance 101 par les crémaillères 103.

L'axe de transmission 120 est monté par son extrémité basse selon l'orientation de la figure 1 dans un palier de rotation 130 constitué par un palier à roulement à aiguilles coulissant dans un logement cylindrique 112 d'axe (x1x1) (x2x2) coaxial à celui de l'axe de transmission 120. Entre la roue à vis 121 et le pignon droit 122, l'axe de transmission 120 est porté par un palier de rotation 140 constitué par un palier à roulement à billes dont la bague intérieure 141 est bloquée en translation sur l'axe 120, par exemple par deux anneaux de butée 142 et dont la bague extérieure 143 est logée dans un organe de couplage 150 reliant les paliers de rotation 140 des deux axes de transmission 120 pour solidariser les deux axes de transmission dans leur mouvement de translation (double flèche F) le long des axes (x1x1) et (x2x2), parallèles comme cela sera décrit. L'organe de couplage 150 est guidé dans un logement 113 du corps 110 pour son mouvement de translation suivant la direction (x1x1/x2x2).

L'organe de couplage 150 de la figure 1 représenté de manière très schématique et générale assure les deux fonctions par une même pièce, à savoir la solidarisation en translation des axes de transmission 120 et le guidage des axes 120 dans la direction (x1x1/x2x2).

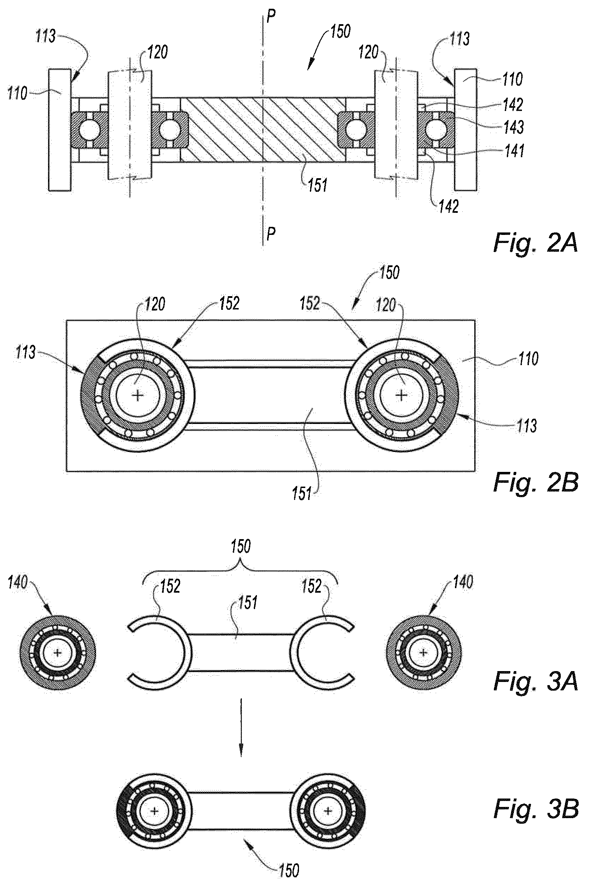

Les figures 2A-3B montrent un mode de réalisation de cet organe de couplage 150 est constitué par une traverse 151 terminée à ses deux extrémités par une boucle 152, notamment une boucle ouverte dans laquelle est engagée la bague extérieure 143 de chacun des deux paliers de rotation 140 constitués par des roulements à billes. Ces paliers 140 sont fixés par leur bague intérieure 141, solidairement en translation sur chacun des deux axes 120.

Les boucles 152 de l'organe de couplage 150 sont guidées en translation dans la direction perpendiculaire au plan de la figure 2B dans les logements cylindriques 113 réalisés dans le corps 110 du servofrein électrique 100.

Les figures 3A-3B montrent le détail de ce mode de réalisation de l'organe de couplage 150 avec sa traverse 151 terminée par les deux boucles ouvertes 152 qui peuvent recevoir par clipage les deux paliers à roulement à billes 140. La structure terminée est représentée à la figure 3B en vue de dessus.

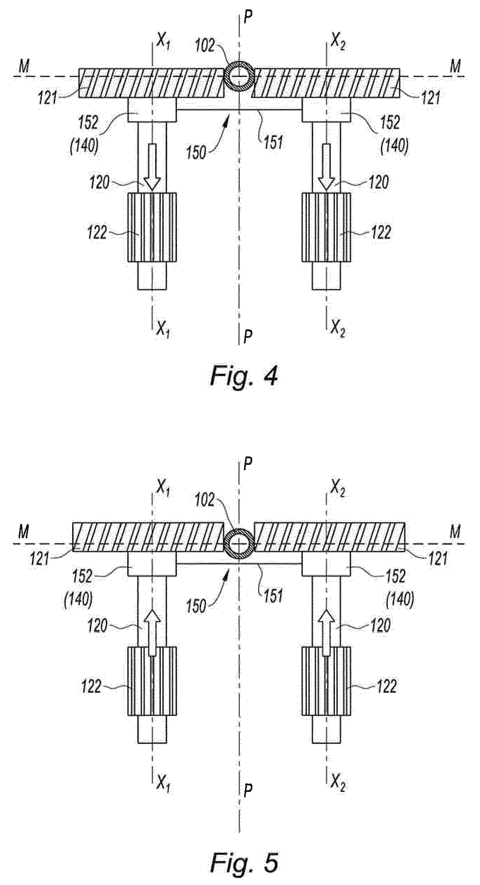

Les figures 4 et 5 montrent très schématiquement les deux positions d'équilibre ou de compensation de jeu réalisées par le servofrein électrique 100 selon l'invention grâce à la liberté de translation des deux axes de transmission 120 néanmoins solidaires en translation par l'organe de couplage 150 et les deux paliers de rotation 140. La figure 4 montre le cas où les jeux entre les pignons droits 122 et les deux crémaillères 103 se traduisent par un déplacement vers le bas de l'équipage mobile en translation constitué par les deux axes de transmission 120, les pignons droits 122 et les roues à vis 121 par rapport au plan médian MM passant par la vis 102. La figure 5 montre une position opposée résultant du soulèvement de compensation de l'équipage mobile 120, 121, 122, 150 par rapport au plan médian MM passant par l'axe de la vis 102.

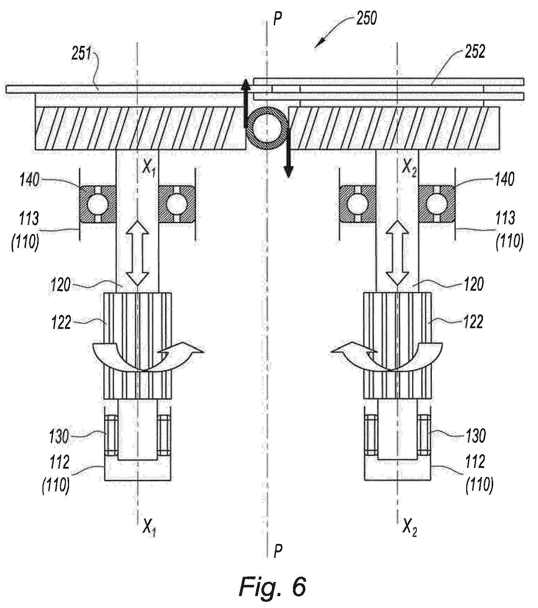

La figure 6 montre un second mode de réalisation d'un organe de couplage 250 des deux axes de transmission 120. Selon cette variante, l'organe de couplage 250 assure le couplage en translation sans assurer le guidage en translation des deux axes de transmission 120. Le guidage en translation est assuré dans ce cas par les deux paliers de roulement 130, 140, notamment le palier de roulement à aiguilles 130 à l'extrémité basse de l'axe de transmission 120 et le palier à roulement à billes 140 entre le pignon droit 122 et la roue à vis 121 de chacun des deux axes 120. Les puits ou logements cylindriques 112, 113 de section circulaire recevant chacun des deux paliers de rotation 130, 140 de chaque axe de transmission 120 sont représentés par de simples traits ; ces logements de guidage 112, 113 sont réalisés dans le corps 110 du servofrein 100.

L'organe de couplage 250 selon cette variante est constitué par une couronne circulaire ou un disque 251 porté par le premier axe de transmission 120 (x1x1) et par une double couronne 252 chevauchant le bord du disque 251 du premier axe de transmission 120 pour permettre la libre rotation mais solidarisée en translation des deux axes 120.

### NOMENCLATURE

- 100: Servofrein électrique
- 101: Piston d'assistance
- 102: Vis
- 103: Crémaillère
- 110: Corps du servofrein
- 111: Cylindre de guidage du piston d'assistance
- 112: Logement de guidage
- 113: Logement de guidage
- 120: Axe de transmission
- 121: Roue à vis
- 122: Pignon droit
- 130: Palier de rotation/palier à roulement à aiguilles
- 140: Palier de rotation/palier à roulement à billes
- 141: Bague intérieure
- 142: Anneau de butée
- 143: Bague extérieure
- 150: Organe de couplage
- 151: Traverse
- 152: Boucle/couronne double
- 250: Organe de couplage
- 251: Couronne circulaire/disque
- x1x1, x2x2: Axe géométrique des axes de transmission 120
- yy: Axe du piston d'assistance 101
- y1y1: Axe de la vis 102
- PP: Plan de symétrie du servofrein
- MM: Plan médian

## Revendications

1. Servofrein électrique comportant un moteur électrique actionnant un piston d'assistance (10) agissant sur le maître-cylindre sur commande de la pédale de frein, le piston d'assistance (101) étant entraîné dans le sens de son action sur le maître-cylindre par un moteur électrique relié à une transmission mécanique comprenant :
- une vis (102) portée par l'axe du moteur et engrenant avec deux roues à vis (121), symétriques, solidaires chacune d'un axe de transmission (120) portant un pignon droit (122) engrenant avec une crémaillère (103) du piston d'assistance (101),
- chaque axe (120) étant logé dans un palier du corps (110) du servofrein (100),
servofrein électrique **caractérisé en ce que**
- les axes (120) sont libres en translation par rapport à la vis (102) et au corps (110) du servofrein électrique mais solidaires entre eux (150, 250) dans leur mouvement de translation.

2. Servofrein électrique selon la revendication 1,
**caractérisé en ce que**
les axes (120) sont reliés solidairement en translation par un organe de couplage (150) constitué par une traverse (151) portant deux paliers de rotation (140) bloqués chacun sur un axe (120) et coopérant avec un guidage axial (113) parallèlement à l'axe géométrique (x1x1/x2x2) des deux axes de transmission (120).

3. Servofrein électrique selon la revendication 2,
**caractérisé en ce que**
l'organe de couplage (150) se compose d'une traverse (151) terminée par deux boucles (152) recevant chacune la bague extérieure (143) d'un des paliers de rotation (140).

4. Servofrein électrique selon la revendication 1,
**caractérisé en ce que**
chaque axe de transmission (120) est muni d'un palier de rotation (130, 140) de part et d'autre du pignon droit (122) engrenant avec sa crémaillère (103).

5. Servofrein électrique selon la revendication 4,
**caractérisé en ce que**
le palier bas (130) à l'extrémité de l'axe de transmission (120) du côté opposé à celle portant la roue à vis (121) est un palier à roulement à aiguilles et le palier haut (140) entre le pignon droit (122) et la roue à vis (121) est un palier à roulement à billes.

6. Servofrein électrique selon la revendication 2,
**caractérisé en ce que**
le coulissement axial de l'organe de couplage (150) est réalisé par un logement axial (112, 113) recevant chaque palier de rotation (130, 140).

7. Servofrein électrique selon la revendication 2,
**caractérisé en ce que**
les paliers de rotation (140) sont des paliers à roulement à billes.

8. Servofrein électrique selon la revendication 1,
**caractérisé en ce que**
les deux axes (120) sont solidarisés en translation selon leur axe (x1x1/x2x2) par un organe de couplage (251) constitué par un premier disque (251) solidaire d'un axe (120) et d'un double disque (252) solidaire de l'autre axe (120) et chevauchant le bord du disque (251), le guidage en translation des axes (120) étant réalisé par des logements cylindriques (112, 113) recevant les paliers de rotation (130, 140) portés par chaque axe (120).

## Patentansprüche

1. Elektrischer Bremskraftverstärker, der einen Elektromotor aufweist, welcher einen Hilfskolben (10) betätigt, der auf Befehl des Bremspedals auf den Hauptzylinder einwirkt, wobei der Hilfskolben (101) in Richtung seiner Einwirkung auf den Hauptzylinder durch einen Elektromotor angetrieben wird, der mit einer mechanischen Kraftübertragungseinheit verbunden ist, die enthält:
- eine Schnecke (102), die von der Achse des Motors getragen wird und in zwei symmetrische Schneckenräder (121) eingreift, die je mit einer Kraftübertragungsachse (120) fest verbunden sind, die ein Stirnrad (122) trägt, das in eine Zahnstange (103) des Hilfskolbens (101) eingreift,
- wobei jede Achse (120) in einem Lager des Körpers (110) des Bremskraftverstärkers (100) untergebracht ist,
elektrischer Bremskraftverstärker, **dadurch gekennzeichnet, dass**
- die Achsen (120) bezüglich der Schnecke (102) und des Körpers (110) des elektrischen Bremskraftverstärkers translatorisch frei, aber in ihrer Translationsbewegung fest miteinander (150, 250) verbunden sind.

2. Elektrischer Bremskraftverstärker nach Anspruch 1, **dadurch gekennzeichnet, dass** die Achsen (120) durch ein Kopplungsorgan (150) translatorisch fest verbunden sind, das von einem Querträger (151) gebildet wird, der zwei Drehlager (140) trägt, die je auf einer Achse (120) blockiert sind und mit einer axialen Führung (113) parallel zur geometrischen Achse (x1x1/x2x2) der zwei Kraftübertragungsachsen (120) zusammenwirken.

3. Elektrischer Bremskraftverstärker nach Anspruch 2, **dadurch gekennzeichnet, dass** das Kopplungsorgan (150) aus einem Querträger (151) besteht, der in zwei Ösen (152) endet, die je den äußeren Ring (143) eines der Drehlager (140) aufnehmen.

4. Elektrischer Bremskraftverstärker nach Anspruch 1, **dadurch gekennzeichnet, dass** jede Kraftübertragungsachse (120) mit einem Drehlager (130, 140) zu beiden Seiten des Stirnrads (122) versehen ist, das in seine Zahnstange (103) eingreift.

5. Elektrischer Bremskraftverstärker nach Anspruch 4, **dadurch gekennzeichnet, dass** das untere Lager (130) am Ende der Kraftübertragungsachse (120) auf der Seite, die derjenigen entgegengesetzt ist, die das Schneckenrad (121) trägt, ein Nadellager ist, und das obere Lager (140) zwischen dem Stirnrad (122) und dem Schneckenrad (121) ein Kugellager ist.

6. Elektrischer Bremskraftverstärker nach Anspruch 2, **dadurch gekennzeichnet, dass** das axiale Gleiten des Kopplungsorgans (150) durch eine axiale Aufnahme (112, 113) erfolgt, die jedes Drehlager (130, 140) aufnimmt.

7. Elektrischer Bremskraftverstärker nach Anspruch 2, **dadurch gekennzeichnet, dass** die Drehlager (140) Kugellager sind.

8. Elektrischer Bremskraftverstärker nach Anspruch 1, **dadurch gekennzeichnet, dass** die zwei Achsen (120) gemäß ihrer Achse (x1x1/x2x2) durch ein Kopplungsorgan (251) translatorisch fest verbunden sind, das aus einer ersten Scheibe (251), die fest mit einer Achse (120) verbunden ist, und aus einer Doppelscheibe (252) besteht, die fest mit der anderen Achse (120) verbunden ist und den Rand der Scheibe (251) überlappt, wobei die Translationsführung der Achsen (120) durch zylindrische Aufnahmen (112, 113) erfolgt, die die von jeder Achse (120) getragenen Drehlager (130, 140) aufnehmen.

## Claims

1. Electric brake booster comprising an electric motor activating a booster piston (10) acting on the master-cylinder when the brake pedal is activated, the booster piston (101) being driven in the direction of the action of same on the master-cylinder by an electric motor linked to a mechanical transmission comprising:
- a screw (102) carried by the shaft of the motor and meshing with two symmetrical worm gears (121), each integral with a transmission shaft (120) carrying a spur gear (122) meshing with a rack (103) of the booster piston (101),
- each shaft (120) being housed in a bearing of the body (110) of the brake booster (100),
the electrical brake booster being **characterized in that**
- the shafts (120) are free in translation relative to the screw (102) and to the body (110) of the electric brake booster but are integrally interconnected (150, 250) in the translational movement of same.

2. Electric brake booster according to Claim 1,
**characterized in that**
the shafts (120) are integrally connected in translation by a coupling member (150) formed by a crosspiece (151) carrying two rotary bearings (140) each locked on a shaft (120) and cooperating with an axial guide (113) parallel to the geometric axis (x1x1/x2x2) of the two transmission shafts (120).

3. Electric brake booster according to Claim 2,
**characterized in that**
the coupling member (150) is formed of a crosspiece (151) terminated by two loops (152) each receiving the outer ring (143) of one of the rotary bearings (140).

4. Electric brake booster according to Claim 1,
**characterized in that**
each transmission shaft (120) is equipped with a rotary bearing (130, 140) on either side of the spur gear (122) meshing with the rack (103) thereof.

5. Electric brake booster according to Claim 4,
**characterized in that**
the low bearing (130) at the end of the transmission shaft (120) on the side opposite that carrying the worm screw (121) is a needle roller bearing and the high bearing (140) between the spur gear (122) and the worm screw (121) is a ball bearing.

6. Electric brake booster according to Claim 2,
**characterized in that**
the axial sliding of the coupling member (150) is produced by an axial seat (112, 113) receiving each rotary bearing (130, 140).

7. Electric brake booster according to Claim 2, **characterized in that**
the rotary bearings (140) are ball bearings.

8. Electric brake booster according to Claim 1, **characterized in that**
the two shafts (120) are integrally connected in translation along the axis thereof (x1x1/x2x2) by a coupling member (251) formed by a first disk (251) integral with one shaft (120) and a double disk (252) integral with the other shaft (120) and overlapping the edge of the first disk (251), the guidance in translation of the shafts (120) being produced by cylindrical seats (112, 113) receiving the rotary bearings (130, 140) carried by each shaft (120).
